# EUROPÄISCHE PATENTSCHRIFT

(11) **EP 2 048 483 B1**
(45) Veröffentlichungstag und Bekanntmachung des Hinweises auf die Patenterteilung: **03.04.2019**
(21) Anmeldenummer: 08012551.1
(22) Anmeldetag: 11.07.2008
(51) Int. Cl.: G01F 23/288, G01F 23/02

(54) **Füllstandmessgerät mit explosionssicherem Gehäuse**
Fill level measuring device with explosion-proof casing
Appareil de mesure du niveau de remplissage doté d'un boîtier résistant aux explosions

(30) Priorität: 08.10.2007 DE 102007048203
(43) Veröffentlichungstag der Anmeldung: 15.04.2009
(73) Patentinhaber: VEGA Grieshaber KG, 77709 Wolfach (DE)
(72) Erfinder: Becherer, Frank, 77716 Haslach (DE); Rauer, Winfried, 77716 Fischerbach (DE); Koernle, Ralf, 77736 Zell a. H. (DE)
(74) Vertreter: Patentanwälte Bauer Vorberg Kayser

(56) Entgegenhaltungen:
- WO-A-2004/088684
- DE-A1- 2 734 897
- DE-A1- 3 129 386
- US-A- 4 224 047
- US-A- 4 788 929
- US-A- 4 977 418

## Beschreibung

Die Erfindung betrifft ein Füllstandmessgerät mit einem explosionssicheren Gehäuse gemäß Oberbegriff des Patentanspruchs 1.

In der Füllstandmesstechnik ist es oftmals notwendig, Füllstandsensoren bzw. Füllstandmessgeräte in explosionsgefährdeten Umgebungen, beispielsweise in explosionsgefährlichen Dämpfen, anzubringen. Damit von den Füllstandmessgeräten keine Explosionsgefahr ausgeht, werden diese in explosionssicheren (ex-sicheren) Gehäusen untergebracht. Solche explosionssicheren Gehäuse weisen verschiedene Sicherheitsmerkmale auf, die sicherstellen, dass durch die in dem Gehäuse angeordnete Messelektronik kein Zündfunke an die explosionsgefährdete Umgebung abgegeben werden kann. Solche Merkmale sind zum Beispiel die hermetische Verschließung des Gehäuses sowie dessen Erdung.

Um trotz der hermetischen Kapselung des Gehäuses Messsignale in das Gehäuse sowie Messwerte aus dem Gehäuse zu führen, sind verschiedene Gehäusedurchführungen bekannt. Neben Kabeldurchführungen für Messsignalleitungen gibt es für optisch arbeitende Füllstandmessgeräte sogenannte Druckglasdurchführungen, die mit einem Schauglas ausgestattet sind, durch welches optische Signale in das hermetisch verkapselte Gehäuse geführt werden können. So ist zum Beispiel eine Druckglasdurchführung bekannt, bei der eine dickwandige Glasscheibe in einen Aufnahmering einzementiert und mittels eines weiteren Teiles gegen den Aufnahmering verspannt wird. Diese Verspannung erfolgt über einen zusätzlichen Stempel, der in die Druckglasverschraubung eingeschraubt ist und die Glasplatte gegen den Körper der Druckglasdurchführung presst.

Aus DE 27 34 897 sind auch Flüssigkeitsstandanzeige-Einrichtungen bekannt, die ein in einen Ring eingegossenes Schauglas aufweisen, um eine Kammer für eine Schwimmkugel zu bilden.

Die bekannte Ausführungsform hat den Nachteil, dass sie eine extrem große Bauform aufweist und durch die Vielzahl der benötigten Teile aufwändig in ihrer Herstellung ist.

Aufgabe der Erfindung ist es, ein Füllstandmessgerät mit einem explosionssicherem Gehäuse bereitzustellen, das eine kompakte Bauform aufweist und darüber hinaus einfach und günstig herzustellen ist.

Diese Aufgabe wird gelöst durch ein Füllstandmessgerät mit den Merkmalen des Patentanspruchs 1.

Ein solches Füllstandmessgerät mit einem Szintillationszähler und einem explosionssicheren Gehäuse weist eine Druckglasdurchführung mit einem Glas und einem metallischen Rahmen auf. Solche Füllstandmessgeräte sind beispielweise aus WO 2004/088684 bekannt. Erfindungsgemäß ist das Glas in den Rahmen eingeschmolzen und die Druckglasdurchführung ist zwischen einem Szintillator und einem Photomultiplier angeordnet, wobei der Rahmen zylindrisch geformt ist und ein Außengewinde zur Verschraubung der Druckglasdurchführung mit dem Gehäuse aufweist, wobei der Rahmen an einem zweiten Ende eine stirnseitig angeordnete umlaufende Nut aufweist, in der ein O-Ring zur lichtdichten Ankopplung an den Photomultiplier angeordnet ist.

Da die Druckglasdurchführung zu einem wesentlichen Teil die Größe der Bauform, insbesondere den Durchmesser des Gehäuses eines solchen Füllstandmessgerätes bestimmt, ist es durch eine Druckglasdurchführung mit kleiner Bauform, bei der das Glas direkt in den Rahmen eingeschmolzen ist, möglich, die Größe des Gehäuses wesentlich zu reduzieren. Dadurch, dass die Druckglasdurchführung nur noch aus einem Teil besteht, nämlich dem Rahmen mit dem eingeschmolzenen Glas, sinken auch die Herstellungskosten.

Idealerweise ist der Rahmen der Druckglasdurchführung zylindrisch ausgeformt. Da der Rahmen außerdem ein Außengewinde aufweist, ist die Druckglasdurchführung in das Gehäuse des Füllstandmessgerätes einschraubbar und bei einer ausreichend langen Ausbildung des Gewindes wird somit auch den Ex-Vorschriften Genüge getan. Das Gewinde weist dazu beispielsweise eine Länge von mindestens einem Zentimeter auf. Diese Länge hängt u.a. von der Steigung und vom Volumen des Gehäuses ab und muss gegebenenfalls nach den geltenden Vorschriften für explosionssichere Gehäuse bestimmt werden.

In einer Weiterbildung der Erfindung weist der metallische Rahmen an einem ersten Ende einen umlaufend angeordneten Auflagebund auf. Der Auflagebund kann dabei als zusätzliche Dichtfläche, beispielsweise mit einem entsprechend angeordneten O-Ring verwendet werden. In der Nut am zweiten Ende des Rahmens ist ebenfalls ein O-Ring angebracht, der einerseits eine dichtende Wirkung gewährleistet, andererseits aber auch zur lichtdichten Ankopplung, an beispielsweise einen Photomultiplier, dienen kann.

Das Füllstandmessgerät weist einen Szintillationszähler zur Detektion radioaktiver Strahlung auf. Die Druckglasdurchführung ist zwischen einem Szintillator und den Photomultiplier angeordnet und ist vorteilhafterweise Bestandteil einer Wandung des Gehäuses. Insbesondere bei radiometrischen Füllstandmessgeräten, zum Beispiel einem Szintillationszähler, ist es notwendig, die Elektronik explosionssicher zu verkapseln und dabei aber Lichtimpulse vom Szintillator einkoppeln zu können. Die explosionssichere Verkapselung der Elektronik ist insbesondere notwendig, da der Photomultiplier mit sehr hohen Spannungen arbeitet und so ein erhöhtes Explosionsrisiko durch Funkenbildung besteht. Bei einem zylindrisch ausgeformten Gehäuse des Füllstandmessgerätes ist es zum Beispiel möglich, die Druckglasdurchführung in einer der Deckelflächen des Gehäuses einzuschrauben. Die Druckglasdurchführung kann hierfür beispielsweise als separat handhabbare Einheit ausgebildet sein, sodass eine getrennte Herstellung des Gehäuses und der Druckglasdurchführung möglich ist.

Zur Gewährleistung einer möglichst verlustfreien Einkopplung von optischen Signalen ist das Glas poliert und geläppt. Durch das Polieren und Läppen wird eine große Glattheit der Oberfläche des Glases erreicht, sodass keine Verluste durch Reflexion oder Streuung der optischen Signale erfolgen.

In einer Weiterbildung der Erfindung kann um den vorderseitig angeordneten Szintillator eine hohlzylinderförmige Bleiabschirmung angeordnet sein, die bewirkt, dass auf den Szintillator nur radioaktive Strahlung aus axialer Richtung wirkt. Auf diese Weise kann besonders einfach eine Richtungsabhängigkeit der Detektion erreicht werden.

Die Erfindung wird nachfolgend anhand eines Ausführungsbeispiels unter Bezugnahme auf die beigefügten Figuren ausführlich beschrieben. Es zeigen:
- Figur 1: eine Schnittdarstellung der erfindungsgemäßen Druckglasdurchführung,
- Figur 2: die Druckglasdurchführung aus Figur 1 in Draufsicht von oben,
- Figur 3: die Druckglasdurchführung aus den Figuren 1 und 2 in einer Draufsicht von unten und
- Figur 4: eine Schnittdarstellung eines Füllstandmessgerätes mit einem explosionssicheren Gehäuse und einer Druckglasdurchführung wie sie in den Figuren 1 bis 3 dargestellt ist.

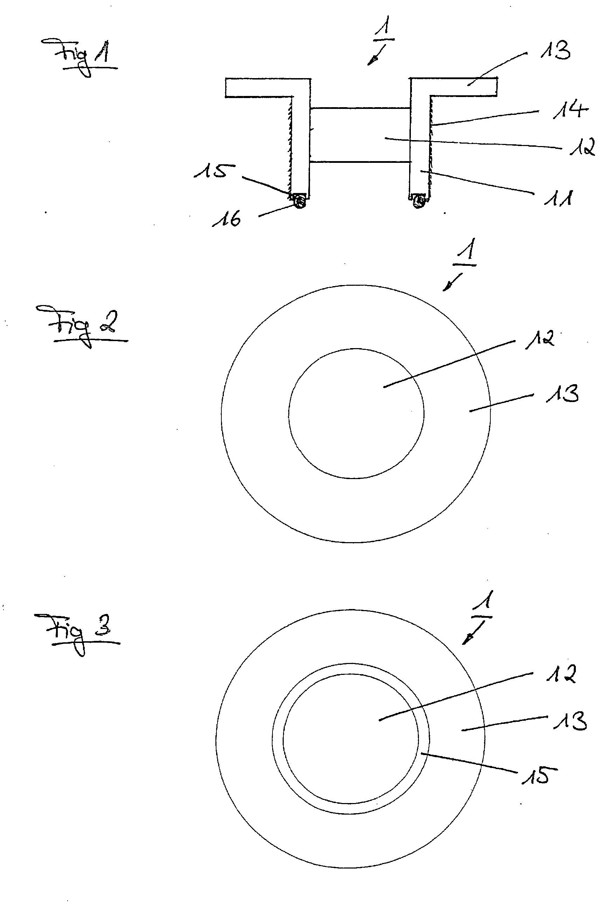

Figur 1 zeigt eine Druckglasdurchführung 1 mit einem zylinderförmig ausgeführten metallischen Rahmen 11, in den ein Glas 12 eingeschmolzen ist. Das Einschmelzen des Glases erfolgt dadurch, dass in den metallischen Rahmen ein hochhitzebeständiger Stempel, zum Beispiel ein Keramikstempel, der einen Durchmesser aufweist, welcher etwa dem Innendurchmesser des Rahmens 11 entspricht, ausgesetzt wird und zwar etwa bis zu einem Drittel der Höhe des Rahmens 11. Anschließend wird flüssiges Glas von oben her in das Innere des Rahmens gefüllt. Dieses flüssige Glas breitet sich horizontal aus und berührt schließlich die Innenwandung des Rahmens 11. Sobald genügend Glas eingefüllt ist, wird gewartet, bis sich das Glas und der zuvor erhitzte Rahmen 11 abgekühlt haben. Da der metallische Rahmen 11 einen größeren Temperaturkoeffizienten als Glas hat, versucht sich der metallische Rahmen 11 mehr zusammenzuziehen als das Glas. Hierdurch wird die Druckdichtigkeit erreicht. Alternativ kann eine vorgefertigte Glasronde in ein gedrehtes Teil eingelegt und zum Schmelzen durch einen Durchlaufofen geschickt werden, so dass das Glas ebenfalls in den Rahmen eingeschmolzen wird.

Der zylinderförmig ausgeführte Rahmen 11 weist an einem ersten Ende einen umfänglich angeordneten Auflagebund 13 auf, der den Rahmen 11 kragenförmig verbreitert. An einem zweiten Ende des Rahmens 11 ist stirnseitig eine umlaufende Nut 15 angeordnet, in der ein O-Ring 16 angeordnet sein kann. Der Rahmen 11 ist über seine gesamte Länge mit einem Außengewinde 14 versehen. Das Außengewinde 14 dient zur Verschraubung der Druckglasdurchführung 1 mit einem Gehäuse 2, wie es später beschrieben wird. Das Glas 12 ist auf halber Höhe des Rahmens 11 angeordnet und weist eine Dicke zwischen 0,8 und 1,3 cm auf. Der Durchmesser des Glases beträgt zwischen 2 und 3 cm.

Figur 2 zeigt eine Draufsicht von oben auf die Druckglasdurchführung 1 aus Figur 1. In dieser Darstellung ist besonders gut der kragenförmige Auflagebund 13 sowie eine mittig angeordnete Öffnung mit dem eingeschmolzenen Glas 12 zu erkennen.

Figur 3 zeigt eine Draufsicht von unten auf die Druckglasdurchführung 1 aus den Figuren 1 und 2. In dieser Darstellung der Druckglasdurchführung 1 ist das mittig angeordnete Glas 12 sowie die am zweiten Ende des Rahmens 11 angeordnete umlaufende Nut 15 deutlich zu erkennen. Der O-Ring 16 ist in Figur 3 nicht dargestellt. Der Auflagebund 13 kann sowohl als mechanischer Anschlag beim Einschrauben der Druckglasdurchführung als auch als Dichtfläche dienen, wenn an einer gegenüberliegenden Fläche des Gehäuses ein weiterer O-Ring angeordnet ist.

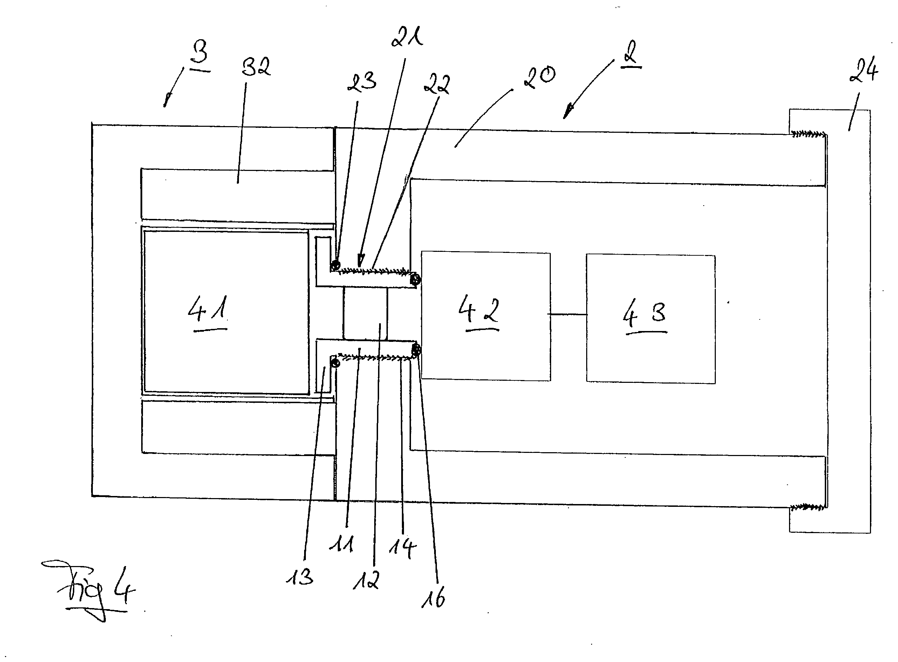

Figur 4 zeigt ein radiometrisches Füllstandmessgerät mit einem explosionssicheren Gehäuse 2, in das eine Druckglasdurchführung 1, wie sie in den Figuren 1 bis 3 beschrieben wurde, eingeschraubt ist. Das Gehäuse 2 weist einen zylindrischen Körper 20 auf, der rückseitig durch einen Verschlussdeckel 24 verschließbar ist. In einer vorderseitigen Deckfläche des Körpers 20 ist eine Durchführung 21 mit einem Innengewinde 22 angeordnet, in das die Druckglasdurchführung 1 mit ihrem Außengewinde 14 einschraubbar ist. Zwischen dem Auflagebund 13 der Druckglasdurchführung 1 und der vorderseitigen Deckfläche des Körpers 20 ist ein O-Ring 23 zur weiteren Abdichtung des Gehäuses 2 angeordnet. Vorderseitig ist ein topfförmiger Deckel 3 vorgesehen, in dem eine hohlzylinderförmige Bleiabschirmung 32 sowie ein, in der Bleiabschirmung 32 sitzender zylinderförmiger Szintillator 41 angeordnet sind. Der Szintillator 41 sitzt zentral über der Druckglasdurchführung 1, sodass durch radioaktive Strahlung im Szintillator erzeugte Lichtblitze durch das Glas 12 ins Innere des Gehäuses 2 geleitet werden können. Im Inneren des Gehäuses 2 sitzt ein Photomultiplier 42, der die Lichtblitze aus dem Szintillator 41 in ein elektrisches Signal umwandelt. Dem Photomultiplier 42 ist ein Messgerät 43 nachgeschaltet, das aus den elektrischen Signalen gemäß einer gewählten Messanordnung ein Messsignal errechnet.

Es ist anzumerken, dass der Szintillator beispielsweise auch als schlauchförmig ausgebildet sein kann. In diesem Fall ist jedoch ein richtungsabhängiges Detektieren von radioaktiver Strahlung nicht möglich.

Erfindungswesentlich ist das kompakt gebaute explosionssichere Gehäuse 2 mit der Druckglasdurchführung 1, das eine besonders günstige Herstellung eines solchen Füllstandmessgerätes ermöglicht.

### Bezugszeichenliste

- 1: Druckglasdurchführung
- 2: Gehäuse
- 3: Deckel
- 4: Szintillationszähler

- 11: Rahmen
- 12: Glas
- 13: Auflagebund
- 14: Außengewinde
- 15: Nut
- 16: O-Ring

- 20: Körper
- 21: Durchführung
- 22: Innengewinde
- 23: O-Ring
- 24: Verschlussdeckel

- 32: Bleiabschirmung

- 41: Szintillator
- 42: Photomultiplier
- 43: Messgerät

## Patentansprüche

1. Füllstandmessgerät mit einem Szintillationszähler und einem explosionssicheren Gehäuse (2), wobei der Szintillationszähler einen Szintillator (41) und einen Photomultiplier (42) aufweist, das Gehäuse eine Druckglasdurchführung (1) mit einem Glas (12) und einem metallischen Rahmen (11) aufweist,
die Druckglasdurchführung (1) zwischen dem Szintillator (41) und dem Photomultiplier (42) angeordnet ist,
**dadurch gekennzeichnet, dass**
das Glas (12) in den Rahmen (11) eingeschmolzen ist, der Rahmen (11) zylindrisch geformt ist und ein Außengewinde (14) zur Verschraubung der Druckglasdurchführung (1) mit dem Gehäuse (2) aufweist, und der Rahmen (11) an einem Ende eine stirnseitig angeordnete umlaufende Nut (15) aufweist, in der ein O-Ring (16) zur lichtdichten Ankopplung an den Photomultiplier (42) angeordnet ist.

2. Füllstandmessgerät nach Anspruch 1,
**dadurch gekennzeichnet, dass**
das Außengewinde (14) eine Länge von mindestens 1 cm aufweist.

3. Füllstandmessgerät nach einem der vorhergehenden Ansprüche,
**dadurch gekennzeichnet, dass**
der Rahmen (11) an einem ersten Ende einen umlaufend angeordneten Auflagebund (13) aufweist.

4. Füllstandmessgerät nach einem der vorhergehenden Ansprüche,
**dadurch gekennzeichnet, dass**
die Druckglasdurchführung (1) Bestandteil einer Wandung des Gehäuses (2) ist.

5. Füllstandmessgerät nach einem der vorhergehenden Ansprüche,
**dadurch gekennzeichnet, dass**
die Druckglasdurchführung (1) eine separat handhabbare Einheit ist.

6. Füllstandmessgerät nach einem der vorhergehenden Ansprüche,
**dadurch gekennzeichnet, dass**
das Glas (12) poliert und geläppt ist.

7. Füllstandmessgerät nach einem der vorhergehenden Ansprüche,
**dadurch gekennzeichnet, dass**
das Glas (12) einen Durchmesser zwischen 2 und 3 cm aufweist.

8. Füllstandmessgerät nach einem der vorhergehenden Ansprüche,
**dadurchgekennzeichnet**, dass
das Glas (12) eine Dicke zwischen 0,8 und 1,3 cm aufweist.

9. Füllstandmessgerät nach einem der vorhergehenden Ansprüche,
**dadurch gekennzeichnet, dass**
das Glas (12) auf halber Höhe des Rahmens (11) sitzt.

10. Füllstandmessgerät nach einem der vorhergehenden Ansprüche,
**dadurch gekennzeichnet, dass**
das Gehäuse (2) aus Metall gefertigt ist.

11. Füllstandmessgerät nach einem der vorhergehenden Ansprüche,
**dadurch gekennzeichnet, dass**
um den Szintillator (41) eine hohlzylinderförmige Bleiabschirmung (32) angeordnet ist.

## Claims

1. A filling level measuring device comprising a scintillation counter and an explosion-proof housing (2), wherein the scintillation counter has a scintillator (41) and a photomultiplier (42), the housing has a pressure glass seal (1) with a glass (12) and a metallic frame (11),
the pressure glass seal (1) is disposed between the scintillator (41) and the photomultiplier (42),
**characterized in that**
the glass (12) is fused into the frame (11), the frame (11) is shaped cylindrically and has an outer thread (14) for screwing the pressure glass seal (1) to the housing (2), and the frame (11) has, at one end, a peripheral groove (15), which is disposed at the end face and in which an O-ring (16) for a lightproof coupling to the photomultiplier (42) is disposed.

2. The filling level measuring device according to claim 1,
**characterized in that**
the outer thread (14) has a length of at least 1 cm.

3. The filling level measuring device according to any one of the preceding claims,
**characterized in that**
the frame (11) has a peripherally arranged support collar (13) on a first end.

4. The filling level measuring device according to any one of the preceding claims,
**characterized in that**
the pressure glass seal (1) is a constituent part of a wall of the housing (2).

5. The filling level measuring device according to any one of the preceding claims,
**characterized in that**
the pressure glass seal (1) is a unit that can be handled separately.

6. The filling level measuring device according to any one of the preceding claims,
**characterized in that**
the glass (12) is polished and lapped.

7. The filling level measuring device according to any one of the preceding claims,
**characterized in that**
the glass (12) has a diameter of between 2 and 3 cm.

8. The filling level measuring device according to any one of the preceding claims,
**characterized in that**
the glass (12) has a thickness of between 0.8 and 1.3 cm.

9. The filling level measuring device according to any one of the preceding claims,
**characterized in that**
the glass (12) is situated halfway up the frame (11).

10. The filling level measuring device according to any one of the preceding claims,
**characterized in that**
the housing (2) is made from metal.

11. The filling level measuring device according to any one of the preceding claims,
**characterized in that**
a hollow-cylindrical lead shield (32) is disposed around the scintillator (41).

## Revendications

1. Appareil de mesure de niveau avec un compteur à scintillation et un boîtier antidéflagrant (2), le compteur à scintillation comportant un scintillateur (41) et un photomultiplicateur (42), le boîtier comportant un passage en verre comprimé (1) avec un verre (12) et un cadre métallique (11),
le passage en verre comprimé (1) étant disposé entre le scintillateur (41) et le photomultiplicateur (42), **caractérisé en ce que** le verre (12) est scellé par fusion dans le cadre (11), le cadre (11) est formé cylindriquement et comporte un filetage extérieur (14) pour visser le passage en verre comprimé (1) au boîtier (2) et le cadre (11) comporte à une extrémité une rainure (15) périphérique disposée du côté frontal dans laquelle est disposé un joint torique (16) pour l'accouplement étanche à la lumière au photomultiplicateur (42).

2. Appareil de mesure de niveau selon la revendication 1, **caractérisé en ce que** le filetage extérieur (14) comporte une longueur d'au moins 1 cm.

3. Appareil de mesure de niveau selon l'une quelconque des revendications précédentes, **caractérisé en ce que** le cadre (11) comporte à une première extrémité un collet d'appui (13) disposé sur la périphérie.

4. Appareil de mesure de niveau selon l'une quelconque des revendications précédentes, **caractérisé en ce que** le passage en verre comprimé (1) est une partie constituante d'une paroi du boîtier (2).

5. Appareil de mesure de niveau selon l'une quelconque des revendications précédentes, **caractérisé en ce que** le passage en verre comprimé (1) est une unité séparément manipulable.

6. Appareil de mesure de niveau selon l'une quelconque des revendications précédentes, **caractérisé en ce que** le verre (12) est poli et rodé.

7. Appareil de mesure de niveau selon l'une quelconque des revendications précédentes, **caractérisé en ce que** le verre (12) comporte un diamètre entre 2 et 3 cm.

8. Appareil de mesure de niveau selon l'une quelconque des revendications précédentes, **caractérisé en ce que** le verre (12) comporte une épaisseur entre 0,8 et 1,3 cm.

9. Appareil de mesure de niveau selon l'une quelconque des revendications précédentes, **caractérisé en ce que** le verre (12) est logé à la mi-hauteur du cadre (11).

10. Appareil de mesure de niveau selon l'une quelconque des revendications précédentes, **caractérisé en ce que** le boîtier (2) est fabriqué en métal.

11. Appareil de mesure de niveau selon l'une quelconque des revendications précédentes, **caractérisé en ce qu'**un blindage en plomb (32) de forme cylindrique creuse est disposé autour du scintillateur (41).
